# EUROPEAN PATENT APPLICATION

(11) **EP 4 845 147 A1**
(43) Date of publication of application: **25.11.2026**
(21) Application number: 25315182.3
(22) Date of filing: 22.05.2025
(51) Int. Cl.: H04N 19/13, H04N 19/124, H04N 19/129, H04N 19/146, H04N 19/176, H04N 19/18, H04N 19/70, H04N 19/91

(54) **CONTEXT CODING OR BYPASS FOR COEFFICIENTS OF A BLOCK USING BUDGET**

(71) Applicant: Beijing Xiaomi Mobile Software Co., Ltd., Beijing Beijing 100085 (CN)
(72) Inventor: ABDOLI, Mohsen, Beijing, 100085 (CN); GHAZNAVI YOUVALARI, Ramin, Beijing, 100085 (CN); TISSIER, Alexandre, Beijing, 100085 (CN); PLOWMAN, Frank, Beijing, 100085 (CN)
(74) Representative: Zimmermann, Tankred Klaus

(57) **Abstract**

A method of processing one or more blocks of a picture is described. The method includes coding one or more or all coefficients of a block of the picture, and the coding includes one or more or all of the following:
responsive to a context budget for context-coding the one or more or all coefficients of the block being exhausted, a significance flag (*sigFlag*) of a coefficient is determined and coded, and/or
responsive to coding a significance flag (*sigFlag*) of a coefficient, a coding of a plurality of further syntax elements of the coefficient is interleaved with a coding of one or more syntax elements of one or more other coefficients of the block; and/or
responsive to a context budget for context-coding the one or more or all coefficients of the block being exhausted, using a predefined a context budget management strategy for coding one or more syntax elements of a coefficient, and/or
depending on a prediction of a context budget excess for a context-coding of the one or more or all coefficients of the block, one or more of a plurality of syntax elements of a coefficient are coded using non-context coding, and/or
an excess of a context budget for context-coding the one or more or all coefficients of the block is determined using a context budget excess condition selected from one of a plurality of context budget excess conditions.

## Description

### Technical Field

The present disclosure generally relates to the field of encoding/decoding pictures, images or videos, and embodiments of the present disclosure concern improvements regarding a coding of coefficients of a block of a picture, like transform skip coefficients or transform coding coefficients. More specific embodiments of the present disclosure relate to the processing of one or more blocks of a picture using coefficient level binarization, e.g., in Transform Skip Residual Coding (TSRC), and/or context budget management.

### Background

The encoding and decoding of a picture, an image or a video is performed in accordance with a certain standard, for example, in accordance with the ISO/IEC 14496-10 Advanced Video Coding, AVC, standard (see reference [1]), the ISO/IEC 23094-1 Essential video coding, EVC, standard, the ISO/IEC 23008-2 High Efficiency Video Coding, HEVC, standard (see reference [2]), the ISO/IEC 23090-3 Versatile Video Coding, VVC, standard (see reference [3]) or the AOMedia Video 1, AV1, standard.

For encoding and decoding a picture, a state-of-the-art process for coding coefficients, e.g., of a Coefficient Group (CG) obtained by decomposing a Transform Unit (TU), starts with context coding the coefficients as long as a context budget is not exhausted. Once context budget is exhausted, the coefficients are continued to be coded using non-context coding, e.g., a Rice mode., which may not be optimal in terms of an achievable bit rate for coding the coefficients.

Thus, there is a need to provide further improvements for processing a picture, an image or a video, e.g., when encoding and/or decoding of the picture, the image or the video.

### Summary

The present disclosure provides a method of processing one or more blocks of a picture, the method comprising:
coding one or more or all coefficients of a block of the picture, wherein the coding comprises one or more or all of the following:
responsive to a context budget for context-coding the one or more or all coefficients of the block being exhausted, a significance flag (*sigFlag*) of a coefficient is determined and coded, and/or
responsive to coding a significance flag (*sigFlag*) of a coefficient, a coding of a plurality of further syntax elements of the coefficient is interleaved with a coding of one or more syntax elements of one or more other coefficients of the block; and/or
responsive to a context budget for context-coding the one or more or all coefficients of the block being exhausted, using a predefined a context budget management strategy for coding one or more syntax elements of a coefficient, and/or
depending on a prediction of a context budget excess for a context-coding of the one or more or all coefficients of the block, one or more of a plurality of syntax elements of a coefficient are coded using non-context coding, and/or
an excess of a context budget for context-coding the one or more or all coefficients of the block is determined using a context budget excess condition selected from one of a plurality of context budget excess conditions.

In accordance with embodiments, responsive to a context budget being exhausted, the coefficient is binarized to obtain a plurality of syntax elements, the plurality of syntax elements comprising the significance flag and one or more of the following: a remaining value level (*remLevel*) of the coefficient and a sign (*sign*) of the coefficient.

In accordance with embodiments,
- the significant flag is binarized from a coefficient level, e.g., from an absolute value of the coefficient, and
- when the significance flag indicates that the coefficient is significant, the remaining level and sign are coded using a non-context coding, e.g., in a bypass Rice mode.

In accordance with embodiments, both a sign value and a remaining level value of the coefficient are coded immediately following the coding of the significant flag.

In accordance with embodiments, a coding of a sign value and a remaining level value of the coefficient is interleaved with a coding of one or more syntax elements of one or more other coefficients of the block.

In accordance with embodiments,
- the sign value is coded immediately following the coding of the significant flag, and a coding of the remaining level value is deferred until a coding of at least one syntax element associated with another coefficient is completed, or
- the remaining level value is coded immediately following the coding of the significant flag, and a coding of the sign value is deferred until a coding of at least one syntax element associated with another coefficient is completed, or
- a coding of the sign and the remaining level values is deferred from the coding of the significant flag until a coding of at least one syntax element associated with another coefficient is completed, or

In accordance with embodiments, the predefined context budget management strategy
- causes a switching to a non-context mode, like a bypass mode, or
- allows a certain level of exceeding the context budget.

In accordance with embodiments, the predefined context budget management strategy defines that, once the context budget is exhausted,
- none of the syntax elements is continued to be context-coded, or
- only a subset of the syntax elements is continued to be context-coded.
- the syntax elements are continued to be context-coded despite the context budget being exhausted.

In accordance with embodiments, the prediction of the context budget excess predicts whether the context budget is exhausted prior to completing the context-coding of a final syntax element of a last coefficient of the block.

In accordance with embodiments,
the prediction is based on a function of
   - a remaining context budget,
   - a scan position of the current coefficient of the block, and
   - a number of coefficients in the block and/or
the prediction is based on at least one information from a previously coded block, wherein
   - the at least one information from a previously coded block is whether or not the previously coded block has ran out of context budget before finishing the coding of a final syntax element of a last coefficient of the block, and/or
   - the at least one information from a previously coded block is a budget consumption of the previously coded block at different positions of the scan process, which is compared with a budget consumption of the current block.

In accordance with embodiments, responsive to the prediction indicating that the context budget will be exhausted, a priority associated with an instance of the syntax elements is modified, and
wherein, responsive to lowering a priority of an instance of the syntax element, the associated syntax elements are no longer context coded.

In accordance with embodiments, the context budget excess condition is selected dependent on at least one of the following:
- a number of syntax elements of the coefficient to be context-coded,
- a maximum number of syntax elements that can be context-coded during a predefined process, like a coding pass for the coefficient.

In accordance with embodiments,
- in case a first number of next syntax elements of the coefficient is to be context-coded, like only a sigFlag, a first threshold is used as the context budget excess condition, and, in case a second number of next syntax elements of the coefficient is to be context-coded, a second threshold is used as the context budget excess condition, the second number and threshold being higher than the first number and threshold, or
- in case the context budget excess is assessed at a beginning of a coding pass for the coefficient, in case up to N syntax elements are possibly coded by context-coding, then a threshold of N is used.

The present disclosure provides a non-transitory computer-readable storage medium comprising instructions which, when executed by a computer, cause the computer to carry out the inventive method.

The present disclosure provides an apparatus of processing one or more blocks of a picture, the apparatus comprising:
a processing module, wherein the processing module is configured to code one or more or all coefficients of a block of the picture, wherein the processing module is configured to perform one or more or all of the following:
responsive to a context budget for context-coding the one or more or all coefficients of the block being exhausted, determine and code a significance flag (*sigFlag*) of a coefficient, and/or
responsive to coding a significance flag (*sigFlag*) of a coefficient, interleave a coding of a plurality of further syntax elements of the coefficient with a coding of one or more syntax elements of one or more other coefficients of the block; and/or
responsive to a context budget for context-coding the one or more or all coefficients of the block being exhausted, use a predefined a context budget management strategy for coding one or more syntax elements of the coefficient, and/or
depending on a prediction of a context budget excess for a context-coding of the one or more or all coefficients of the block, code one or more of a plurality of syntax elements of a coefficient using non-context coding, and/or
determine an excess of a context budget for context-coding the one or more or all coefficients of the block using a context budget excess condition selected from one of a plurality of context budget excess conditions.

The technical solutions provided according to embodiments of the present disclosure have the following beneficial effects.

A state-of-the-art process for coding coefficients of a CG starts with context coding the coefficients as long as the context budget is not exhausted. Once context budget is exhausted, the coefficients are continued to be coded using non-context coding, e.g., a Rice mode. While this conventional process may have some advantages regarding decoder side throughput, it has been found that a downside is that the coding of, e.g., transform skip coefficients or transform coding coefficients is more expensive in terms of bitrate.

Embodiments of the present disclosure address the above shortcomings in the prior art by providing approaches for an improved coefficient level binarization, e.g., in Transform Skip Residual Coding (TSRC), and/or for an improved context budget management.

The present disclosure is advantageous because, other than in conventional approaches, the improved coefficient level binarization and/or the improved context budget management result in an improvement of the performance of the coding process.

It is to be understood that the content described in this section is not intended to identify key or critical features of the embodiment of the present disclosure, nor is it intended to limit the scope of the present disclosure. Other features of the present disclosure become readily apparent from the following description.

### Brief Description of the Drawings

The drawings are explanatory and serve to explain the present disclosure, and are not to be construed to limit the present disclosure to the illustrated embodiments.
- Fig. 1: is a block diagram of a conventional video encoder,
- Fig. 2: is a block diagram of a conventional video decoder,
- Fig. 3: illustrates the partitioning of a 16x16 TU into 16 CGs of size 4x4, and a scanning of a CG using a diagonal scan order;
- Fig. 4: illustrates a diagram of a state-of-the-art budget-constrained context-Rice-coding for level coding,
- Fig. 5: illustrates a flow diagram of a method of processing one or more blocks of a picture in accordance with embodiments of the present disclosure,
- Fig. 6: illustrates a flow diagram of a method of processing one or more blocks of a picture in accordance with embodiments of the present disclosure,
- Fig. 7: illustrates a flow diagram of a method of processing one or more blocks of a picture in accordance with embodiments of the present disclosure,
- Fig. 8: illustrates a flow diagram of a method of processing one or more blocks of a picture in accordance with embodiments of the present disclosure,
- Fig. 9: illustrates a flow diagram of a method of processing one or more blocks of a picture in accordance with embodiments of the present disclosure,
- Fig. 10: illustrates a flow diagram illustrating a coefficient level coding of a coefficient group (CG) using the *sigFlag-rem* binarization in accordance with embodiments of the present disclosure,
- Fig. 11(A)-Fig. 11(D): illustrate the embodiments to modify the coding order of syntax elements in accordance with the present disclosure,
- Fig. 12: illustrates over-budget management embodiments in accordance with the present disclosure,
- Fig. 13: illustrates the use of the bypass mode for *sign* and *parFlag* after predicting a context budget excess in accordance with embodiments of the present disclosure,
- Fig. 14: illustrates an embodiment using two different conditions for a budget excess condition in accordance with embodiments of the present disclosure,
- Fig. 15: illustrates a flow diagram of a method for decoding an encoded data stream in accordance with embodiments of the present disclosure,
- Fig. 16: illustrates a flow diagram of a method for encoding a picture into an encoded data stream in accordance with embodiments of the present disclosure,
- Fig. 17: illustrates a block diagram of an apparatus of processing one or more blocks of a picture in accordance with embodiments of the present disclosure,
- Fig. 18: illustrates a block diagram of a decoder for decoding an encoded data stream in accordance with embodiments of the present disclosure,
- Fig. 19: illustrates a block diagram of an encoder for encoding a picture into an encoded data stream in accordance with embodiments of the present disclosure,
- Fig. 20: illustrates a data stream in accordance with embodiments of the present disclosure, and
- Fig. 21: illustrates a block diagram illustrating an electronic device according to embodiments of the present disclosure.

### Detailed Description

Illustrative embodiments of the present disclosure are described below with reference to the drawings, where various details of the embodiments of the present disclosure are included to facilitate understanding and are to be considered as illustrative only. Accordingly, those of ordinary skill in the art recognize that various changes and modifications of the embodiments described herein may be made without departing from the scope of the present disclosure. Also, descriptions of well-known functions and constructions are omitted from the following description for clarity and conciseness.

In the present disclosure, the term "and/or" is intended to cover all possible combinations and sub-combinations of the listed elements, including any one of the listed elements alone, any sub-combination, or all of the elements, and without necessarily excluding additional elements.

In the present disclosure, the phrase "at least one of...or..." is intended to cover any one or more of the listed elements, including any one of the listed elements alone, any sub-combination, or all of the elements, without necessarily excluding any additional elements, and without necessarily requiring all of the elements.

In the present disclosure, the term "coding" refers to "encoding" or to "decoding" as becomes apparent from the context of the described embodiments. Likewise, the term "coder" refers to "an encoder" or to "a decoder".

In the present disclosure, the terms "if", "when", "in case", "responsive to" may be used interchangeably.

### Standard Video Coder

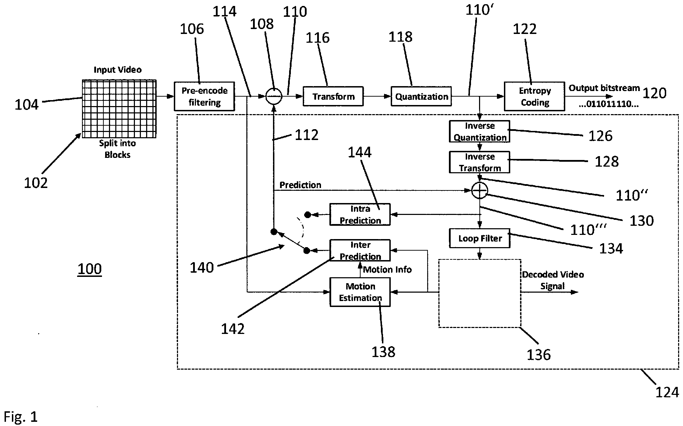

A block diagram of a standard video compression system 100 operating in accordance with the VVC standard is illustrated in Fig. 1. The standard video coder 100 compresses and encodes a picture 102 of a video sequence. The picture 102 to be encoded is partitioned into blocks 104 also referred to as coding units, CUs. The encoder 100 comprises a pre-encode filter 106 and a prediction residual signal former 108 which generates a prediction residual signal 110 so as to measure a deviation of a prediction signal 112 from the signal 114 output by the filter 106. The encoder further comprises a transformer 116, a quantizer 118 and provides an output bitstream or data stream 120 using an entropy coder 122. Further, the encoder 100 comprises a prediction stage 124 for determining the prediction signal 112, which includes a de-quantizer or inverse quantizer 126, an inverse transformer 128, a combiner 130, an in-loop filter 134, a picture buffer 136, a motion estimator 138, an intra/inter mode selector 140, an inter predictor 142 and an intra predictor 144.

The video coder 100 as described with reference to Fig. 1 compresses and encodes a picture 102 of a video sequence as follows. The picture 102 to be encoded is partitioned into the blocks or CUs 104. Each coding unit 104 is encoded using either an intra or inter coding mode. When a CU is encoded in the intra mode, intra prediction is performed by the intra predictor 144. The intra prediction comprises predicting the current CU 114 being encoded by means of already coded, decoded and reconstructed picture samples located around the current CU, e.g., on the top and on the left of the current CU. The intra prediction is performed in the spatial domain. In an inter mode, motion compensation and motion estimation are performed by the motion estimator 138 which searches, in one or more reference pictures provided by the picture buffer 136 and used to predictively code the current picture, a CU that is a good predictor of a current CU. For example, a good predictor of a current CU is a predictor which is similar to the current CU, i.e., the distortion between the two CUs is low or below a certain threshold. The motion estimation may also account for the rate cost of signaling the predictor to optimize a rate-distortion tradeoff. The output of the motion estimation step is one or more motion vectors and reference indices associated with the current CU. The motion compensation then predicts the current CU by means of the one or more motion vectors and reference pictures indices as determined by the motion estimator 138. Basically, the block or CU contained in the selected reference picture and pointed to by the determined motion vector is used as the prediction block for the current CU. The encoder 100, by means of the selector 140, selects one of the intra coding mode or the inter coding mode to use for encoding the CU and indicates the intra/inter decision, for example, by means of a prediction mode flag. Prediction residuals are calculated or determined, for example, by subtracting the predicted block from the original image block. Prediction residuals 110 are then transformed and quantized by blocks 116 and 118, and the quantized transform coefficients as well as the motion vectors and other syntax elements are entropy encoded and written into the output bitstream 120. The encoder 100 may skip the transform stage 116 and apply the quantization directly to the non-transformed residual signal 110 in a so-called transform-skip coding mode. After a block or CU has been encoded, the encoder decodes the CU and reconstructs it so as to obtain the reconstructed signal 110‴ that may serve as a reference data for predicting future CUs or blocks to encode. The quantized transform coefficients 110' are de-quantized and inverse transformed leading to a decoded prediction CU or block 110", and the decoded prediction residuals and the predicted block are then combined at 130, typically summed, so as to provide the reconstructed block or CU 110"'. The in-loop filters 134 are applied to the reconstructed picture to reduce compensation artifacts. For example, a deblocking filter, a sample adaptive offset, SAO, filter, and an adaptive loop filter, ALF, may be applied to reduce encoding artifacts. The filtered picture is stored in the buffer 136, also referred to as the decoded picture buffer, DPB, so that it may be used as a reference picture for coding subsequent pictures.

### Standard Video Decoder

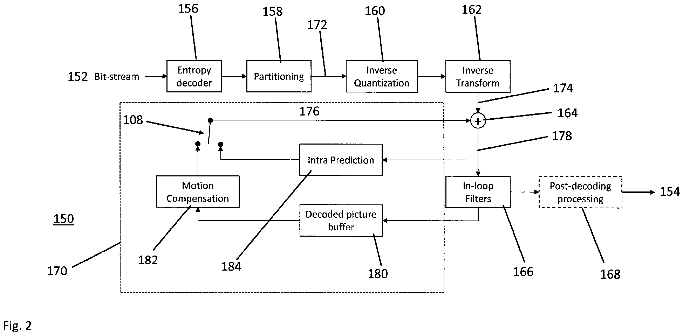

Fig. 2 is a block diagram of a video decoder 150 for predictively decoding from a data or bitstream 152 a picture or video which is provided at an output 154 of the decoder 150. The decoder 150 includes an entropy decoder 156, a partitioning block 158, an inverse quantizer 160, an inverse transformer 162, a combiner 164, an in-loop filter 166, optionally a post-decoding processor 168, and a prediction module 170. The prediction module 170 includes a decoded picture buffer 180 a motion compensator 182 an intra predictor 184.

An encoded picture of a video sequence is decompressed and decoded by the decoder 150 as follows. The input bitstream 152 is entropy decoded by the decoder 156 which provides, for example, the block partitioning information, the coding mode for each coding unit, the transform coefficients contained in each transform block, prediction information, like intra prediction mode, motion vectors, reference picture indices, and other coding information. The block partitioning information indicates how the picture is partitioned and the decoder 150 may divide the input picture into coding tree units, CTUs, typically of a size of 64x64 or 128x128 pixels and divide each CTU into rectangular or square coding units, CUs, according to the decoded partitioning information. The entropy decoded quantized coefficients 172 are de-quantized 160 and inverse transformed 162 so as to obtain the decoded residual picture or CU 174. The decoded prediction parameters are used to predict the current block or CU, i.e., whether the predicted block is to be obtained through its intra prediction or through its motion-compensated temporal prediction. The prediction process performed at the decoder side is the same as the one performed at the encoder side. The decoded residual blocks 174 are added to the predicted block 176, thereby yielding the reconstructed current image block 178. The in-loop filters 166 are applied to the reconstructed picture or image which is also stored in the decoded picture buffer 180 to serve with the reference picture for future pictures to decode. As mentioned above, the decoded picture may further go through a post-decoding processing, for example for performing an inverse color transformation, for example a conversion from YCbCr 4:2:0 to RGB 4:4:4.

In all above processes, the entropy (de)coding of syntax elements representing encoder decisions such as block partitioning information, prediction modes/parameters, quantized transform coefficients, etc. may be carried out by using a context-adaptive entropy coder, such as Context-Adaptive Binary Arithmetic Coding (CABAC). To use CABAC, each syntax element is first binarized to be represented with a series of bins. Then each bin is associated with a CABAC context model that keeps track of binary values of that particular bin in the past, in order to more efficiently model its probability distribution.

### Transform coding in VVC

In VVC, large block-size transforms, up to 64×64 in size, are enabled, which is primarily useful for higher resolution video, e.g., 1080p and 4K sequences. High frequency transform coefficients are zeroed out for the transform blocks with a size (width or height, or both width and height) equal to 64, so that only the lower-frequency coefficients are retained. For example, for a M×N transform block, with M as the block width and N as the block height, when M is equal to 64, only the left 32 columns of transform coefficients are kept. Similarly, when N is equal to 64, only the top 32 rows of transform coefficients are kept. When a transform skip mode is used for a large block, the entire block is used without zeroing out any values. In addition, a transform shift is removed in the transform skip mode.

### Transform Skip (TS) coding

Transform Skip (TS) is a technique used in video coding standards, like HEVC and VVC, to improve the compression efficiency by skipping the transform stage (see, e.g., 116 in Fig. 1) for certain prediction modes. In traditional video coding, each block of pixels undergoes a transform operation (e.g. DCT) before quantization and entropy coding (see, e.g., 118 and 122 in Fig. 1). However, in TS mode, the transform stage is bypassed for specific prediction modes, allowing the encoder to directly quantize the residual signal without transformation. This approach is beneficial for blocks where the residual signal, after prediction, is small or close to zero so that applying a transform may not yield significant compression gains while introducing unnecessary computational overhead. By skipping the transform, the encoder may reduce the complexity and the bitrate overhead associated with the transform stage, which, in turn, leads to an improved compression efficiency. This is especially the case in scenarios with low residual energy or when the residual signal is already well-predicted, e.g., by the motion compensation process (see, e.g., 138 in Fig. 1). The decision to apply the TS mode is usually adaptive and depends on the characteristics of the block and the coding context determined by the encoder.

### Coefficient coding in TS mode

### Transform Unit (TU) vs. Coefficient Group (CG)

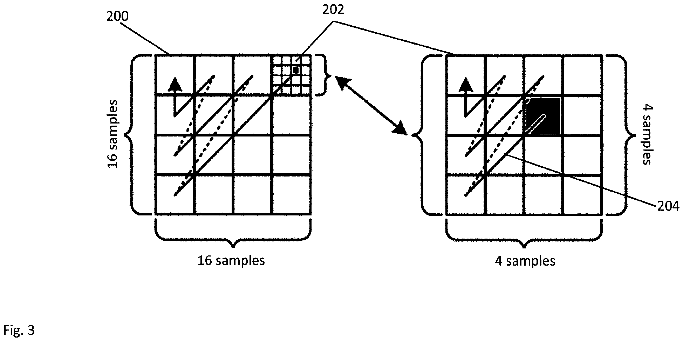

A Transform Unit (TU) is decomposed into Coefficient Groups (CGs) before coding. Typically this is performed by dividing a rectangular TU into a plurality of CGs of constant size of 4x4 pixels. Fig. 3 illustrates the partitioning of a 16x16 TU 200 into 16 CGs 204 of size 4x4, and the scanning of a CG using a diagonal scan order 204. Once the CGs 202 are defined, they are scanned (typically by the diagonal scan order 204) to code the individual coefficients. Each CG 202 is associated with a CG-significance-flag that is coded to indicate whether there is at least one significant coefficient within that CG 202.

### Context budget

For coding the CG coefficients, at the TU-level, a value of a context budget numCtxBin is set. The context budget serves as a budget to determine a maximum number of bins that may be CABAC context coded in the bitstream for the TU's residual. For example, in VVC and ECM, the context budget is determined at the TU-level and as a function of the TU size. In particular, in the VVC Test Model (VTM) and ECM, the context budget numCtxBin is initialized with ≅ 1.7 × number of coefficients.

### Budget-constrained context-Rice mode for level-coding

In this disclosure the term "Level" is referred to as an absolute value of a coefficient, and level-coding methods refer to algorithms defining two aspects: (A) how a coefficient level is binarized and (B) how the bins after the binarization are coded.

In the state-of-the-art codecs (e.g. VVC, ECM), a method referred to as budget-constrained context-Rice-coded method is used. The budget-constrained context-Rice level-coding method includes two internal sub-methods: *context mode* and *Rice mode.* The choice between the two sub-methods is purely based on whether the number of CABAC contexts used for current Transform Unit (TU) has exceeded the context budget, e.g., the a context budget numCtxBin. If the budget is not exceeded, the level-coding method uses the context mode, otherwise, the level-coding method switches to the Rice mode which does not use any CABAC contexts.

When the context mode is used, for a given coefficient level, a binarization is performed or applied that generates the following syntax element flags from the level:
- a significance flag (sigFlag),
- a greater-than-one flag (gt1Flag),
- a parity flag (parFlag),
- one or more greater-than-X flags (gtXFlag), where X=2,4,6,8.

In addition to the above syntax elements, a sign of a coefficient level (negative or positive) may also be CABAC coded.

The coding of a coefficient level using the context mode is performed by coding the above bin or syntax element flags using their associated CABAC context model. In the above process, the value of numCtxBin is decimated, i.e., reduced every time one of the syntax element flags is CABAC coded. Therefore, at some point during the context mode level-coding, the context bin may run out of budget, meaning, e.g., that numCtxBin is not sufficient to code all syntax elements associated with one coefficient. If that happens, the Rice mode is called and used for the rest of the coefficients.

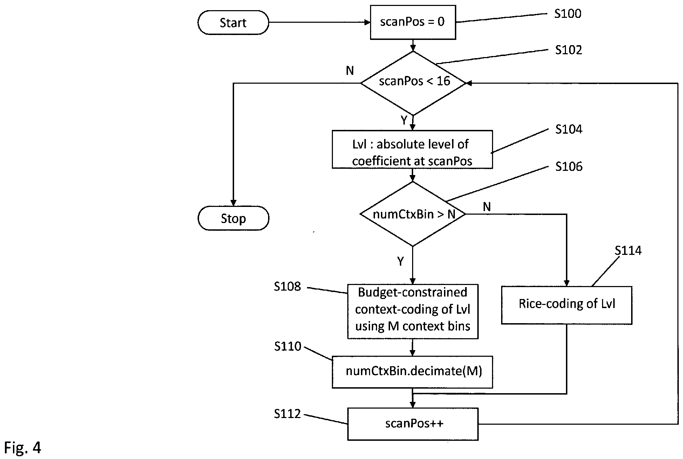

Fig. 4 illustrates a diagram of a state-of-the-art budget-constrained context-Rice-coding for level coding. After the process starts, assuming a CG 202 as depicted in Fig. 3 having a size of 4x4, i.e., 16 scan positions 0 to 16, initially, the current scan position scanPos is set S100 to zero. Then it is determined S102 whether or not the entire CG has been processed, i.e., whether scanPos is less than 16. If no, all scan positions have been processed and the processing of the current block or CG terminates. The process may be repeated for a next CG. If yes, Lvl, the absolute level of coefficient at the current scan position scanPos is obtained S104. Then it is determined S106 whether the context budget numCtxBin is sufficient for context coding Lvl, i.e., whether there is a sufficient number N of context bins left in the budget for context coding Lvl. If yes, Lvl is budget-constrained context-coded S108 using M context bins, and the number of context bins in the context budget is decremented or decimated S110 by the number M of context bins used for coding Lvl. Then the scan position is incremented S112 by one and the process returns to S102.

If it is determined at S106 that the context budget numCtxBin is not sufficient for context coding Lvl, the process switches to the Rice mode and Lvl is Rice-coded S110. Then, the scan position is incremented S112 by one and the process returns to S102.

It is noted that there is another condition triggering a switching to the Rice mode. If the above flags are not sufficient to represent the level, Lvl, of coefficient, e.g., when the coefficient is greater than 8, a remaining level is determined or computed and coded using the Rice mode. In that case the switching to the Rice mode here has nothing to do with running out of the context budget, but is related to the fact that very large numbers are coded more efficiently by the binarization used in the Rice mode.

### Context budget excess condition

In a state-of-the-art approach, like Transform Skip Residual Coding (TSRC), a condition, referred to herein also as budget excess condition, is evaluated regularly to determine whether the next binarized syntax elements is to be context-coded or bypass-coded. To do so, the context budget value in numCtxBin is updated and evaluated regularly.

In particular, during the loops of coefficient coding, every time a syntax element bin is context-coded, the budget in numCtxBin is decimated by the value of 1. Correspondingly, before context-coding of a group of one or more syntax element bins, the budget excess condition is evaluated by comparing the budget to a fixed threshold. This process is described in more detail below (see *Multi-passes coefficient coding in TSRC* below). In VTM and ECM, this threshold is set to 4. The reason for this choice of threshold is related to the process of multi-pass coefficient coding (see below). In a nutshell, the value 4 is used since between a current and a next budget excess condition evaluations, up to 4 bins may possibly be context-coded. Therefore, by ensuring to have a budget of at least 4 left, one may ensure that the context budget is not exceeded until the next time it is evaluated.

### Multi-passes coefficient coding in TSRC

Given a Coefficient Group (CG) and a CABAC context budget (numCtxBin), the coding of the syntax element bins is described as below. In the state-of-the-art, this process comprises three passes. In the first two passes, a function named isBudgetExhausted() is used. This function assesses whether the context budget is currently exhausted, by comparing the remaining budget to the pre-defined threshold of 4.

Pass 1: The first pass visits coefficients within the CG following the diagonal scan order and codes the following syntax elements of each coefficient, if applicable:
- sigFlag
- sign
- gt1Flag
- parFlag

The process of the first pass (**Pass 1**) is as follows:

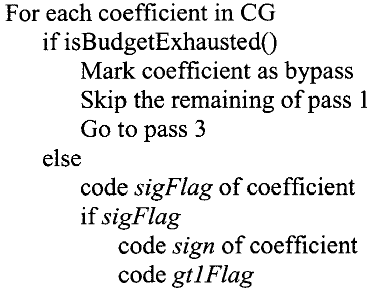

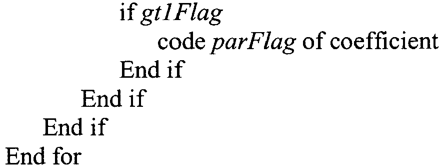

As may be seen from the above process, the above mentioned syntax elements of the first pass are coded only if there is adequate budget left. Otherwise, the remaining part of the first pass as well as the entire second pass are skipped, and the process is continued in pass 3.

**Pass 2**: Similar to the first pass, the second pass also iterates on all coefficients of the CG, until either they are all processed or the CABAC context is exhausted. The process of the second pass is described below. As may be seen, this pass only processes coefficients that have gtlFlag=1 from the first pass. For all such coefficients, the following gtX syntax elements are coded sequentially and only if the previous gtX=1:
- gt2Flag
- gt4Flag
- gt6Flag
- gt8Flag

The process of the second pass (**Pass 2**) is as follows:

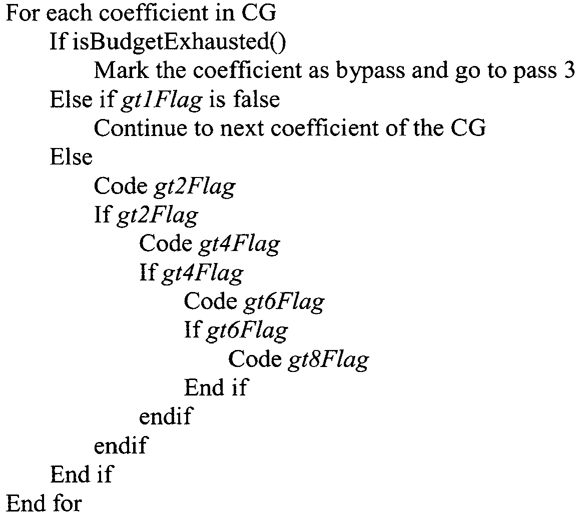

As may be seen from the above process, the above mentioned syntax elements of the second pass are coded only if there is adequate budget left. Otherwise, the coefficient are marked as bypass and the remaining part of the second pass are skipped, and the process is continued in pass 3.

It is noted that both pass 1 and pass 2 are designed such that up to four syntax element bins are context coded in each of their iterations. Moreover, since the context excess is evaluated only at the beginning of each of the first two passes, the threshold for evaluation of the context budget excess is set to 4 in a state-of-the-art or conventional process.

**Pass 3**: The third and last pass and processes coefficients that are not fully coded in the first two passes. There are two scenarios where a coefficient reaches the third pass for coding:
Scenario 1: The amplitude of the coefficient is greater than 8, so even though all syntax elements of the first and second pass have been coded by CABAC context, a remaining level is still needed to be coded in the third pass.
Scenario 2: At least one of the first or second passes has been interrupted due to the CABAC context excess. Therefore, a remaining level is needed to be coded.

In both scenarios, for each coefficient, a cutoff value is determined based on the last syntax element that has been coded for it in the previous passes. If none of the previous passes were executed for the coefficient, then the cutoff is set to zero, meaning that the entire coefficient level is coded in bypass Rice mode.

In pass 3, the remaining level of a coefficient, referred to as *remLevel,* is coded. The determining or computation of the *remLevel* depends on the cutoff value. The process of the third pass (**Pass 3**) is as follows:

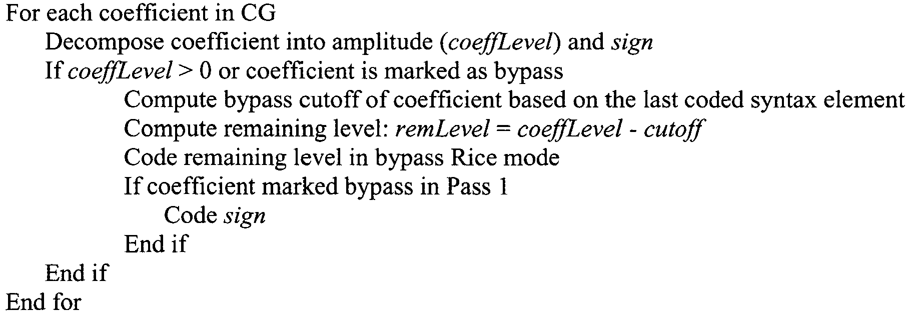

### Disadvantages in prior art approaches

In the current design of ECM and VVC, when normatively running out of context bin budget, the level-coding in the transform skip coding switches to the Rice-mode with no CABAC context coding with no coding of the coefficients' significance flag. Although this is intended to guarantee a certain decoder-side throughput, the downside is that the coding of the transform skip and transform coding coefficients becomes more expensive in terms of bitrate. In particular, when the significance flag is not coded, non-significant coefficients (i.e. zero) are coded using at least two bits, whereas the presence of the significance flag would reduce this to 1 bit; or even less, when the significance coefficient is context-coded.

### Embodiments of the inventive approach

Embodiments of the present disclosure address the above shortcomings in the prior art by providing approaches for an improved coefficient level binarization and coding, e.g., in Transform Skip Residual Coding (TSRC), and/or for an improved context budget management.

The present disclosure is advantageous because, other than in conventional approaches, the improved coefficient level binarization and/or the improved context budget management result in an improvement of the performance of the coding process. Embodiments of the present disclosure change a binarization and other aspects of Transform Skip Residual Coding (TSRC).

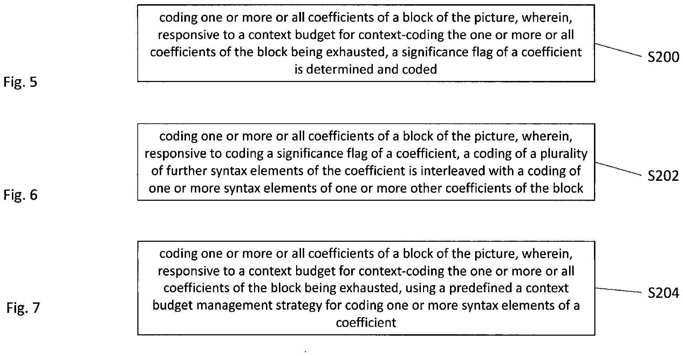

In accordance with embodiments of a first aspect, a new coefficient level binarization is proposed where the coefficient significance flag is always coded regardless of whether the context budget, like a CABAC context budget, is exhausted. When using the new binarization with an exhausted context budget, different strategies for handling the over-budget situation and/or the order of coding the syntax elements after the significance flag may be provided. Fig. 5 illustrates a flow diagram of an embodiment of a method of processing one or more blocks of a picture. The method includes:
S200: Coding one or more or all coefficients of a block of the picture, wherein, responsive to a context budget for context-coding the one or more or all coefficients of the block being exhausted, a significance flag of a coefficient is determined and coded.

Embodiments of the first aspect introduce a sigFlag-rem binarization to be used when the context is exhausted. Embodiments of the first aspect provide a method of processing one or more blocks of picture, the method comprising a binarization method, named sigFlag-rem binarization, that decomposes a coefficient level into a significance flag and a remaining level value; wherein the said remaining value is computed only if the significance flag is true, and wherein the said binarization method is used when the context budget is exhausted.

In accordance with embodiments of a second aspect regarding an order of coding other coding syntax elements, an existing order of coding syntax elements after the significance flag may be modified, e.g., to adapt to the new binarization method. Fig. 6 illustrates a flow diagram of an embodiment of a method of processing one or more blocks of a picture. The method includes:
S202: Coding one or more or all coefficients of a block of the picture, wherein, responsive to coding a significance flag of a coefficient, a coding of a plurality of further syntax elements of the coefficient is interleaved or interweaved with a coding of one or more syntax elements of one or more other coefficients of the block.

Embodiments of the second aspect introduce a modified order, e.g., when the sigFlag-rem binarization is used. As mentioned, Embodiments of the second aspect provide a method of processing one or more blocks of picture, wherein the coding order of syntax elements is modified to include one of the following alternatives:
(a) both the sign and remLevel values are coded immediately following the sigFlag;
(b) only the sign is encoded immediately following the sigFlag, while coding of the remLevel is deferred by at least one syntax element associated with another coefficient;
(c) only the remLevel is coded immediately following the sigFlag, while coding of the sign is deferred by at least one syntax element associated with another coefficient; or
(d) both the sign and remLevel are deferred, such that neither is coded immediately following the sigFlag, and each is encoded after at least one syntax element associated with another coefficient.

In accordance with embodiments of a third aspect regarding a budget management, a certain level of exceeding the context budget is allowed, whereas in accordance with other embodiments, the initial context budget is respected by switching to a bypass mode for the coefficient significance flag. Fig. 7 illustrates a flow diagram of an embodiment of a method of processing one or more blocks of a picture. The method includes: S204: Coding one or more or all coefficients of a block of the picture, wherein, responsive to a context budget for context-coding the one or more or all coefficients of the block being exhausted, using a predefined a context budget management strategy for coding one or more syntax elements of a coefficient.

Embodiments of the third aspect introduce different over-budget management strategies, e.g., when the sigFlag-rem binarization is used. Embodiments of the third aspect provide a method of processing one or more blocks of picture, wherein the context budget management strategy is adjusted to include one of the following methods:
(a) the initial budget constraint is fully respected, such that once the context budget is exhausted, none of the following syntax elements are coded by CABAC contexts.
(b) the initial budget constraint is respected in a controlled and limited manner, where only a subset of the following syntax elements is still coded by using CABAC contexts, while the other following syntax elements are non-context coded.

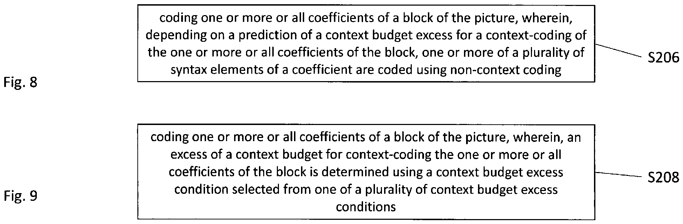

In accordance with embodiments of a fourth aspect, an adaptive budget allocation is provided which, depending on a prediction of context budget excess, de-prioritizes some syntax elements to allow more important syntax elements to benefit from the limited remaining budget. Fig. 8 illustrates a flow diagram of an embodiment of a method of processing one or more blocks of a picture. The method includes:
S206: Coding one or more or all coefficients of a block of the picture, wherein, depending on a prediction of a context budget excess for a context-coding of the one or more or all coefficients of the block, one or more of a plurality of syntax elements of a coefficient are coded using non-context coding.

Embodiments of the fourth aspect introduce an adaptive budget usage in anticipation of budget excess. Embodiments of the fourth aspect provide a method of processing one or more blocks of picture, the method comprising assessing a condition, referred to as a low budget condition, which predicts whether the context budget for residual coding is exhausted prior to completing the coding of a final syntax element of a last coefficient within a residual block; and, in response to the prediction indicating that the context budget is going to be exhausted, performing an adapted budget allocation that modifies the priority of syntax elements with respect to the use of the remaining context budget.

In accordance with embodiments of a fifth aspect, at least two different conditions for assessing the context budget excess are provided and selected adaptively. Fig. 9 illustrates a flow diagram of an embodiment of a method of processing one or more blocks of a picture. The method includes:
S208: Coding one or more or all coefficients of a block of the picture, wherein, an excess of a context budget for context-coding the one or more or all coefficients of the block is determined using a context budget excess condition selected from one of a plurality of context budget excess conditions.

Embodiments of the fifth aspect introduce a multi-threshold context excess condition. Embodiments of a first aspect provide a method of processing one or more blocks of picture, the method comprising at least two conditions for determining whether the context budget is currently exhausted for the residual block, wherein the decision to choose which condition to apply depends on one of the following elements:
(a) the next syntax element of the current residual block to be coded.
(b) The maximum number of syntax element bins that may be context-coded until the next time that the said condition is evaluated.

In accordance with the present disclosure, the coding implements one or more or all of the first aspect, the second aspect, the third aspect, the fourth aspect and the fight aspect.

Various embodiments and approaches for an improved TSRC coefficient level binarization and an improved context budget management are now described in more detail.

The above described state-of-the-art process (see the description of the *Multi-passes coefficient coding in TSRC*) uses two different binarization methods which are referred to herein as *gtX* and *pure-rem* binarization methods.
- ***gtX* binarization:** In this binarization method, given a coefficient level *coeffLevel* (i.e., an absolute value of the coefficient), first the significance flag, also referred to as *sigFlag,* is binarized and then the process is followed by binarizing at least one greater-than-X syntax element bin, also referred to as *gtX.* In the *gtX* binarization method of the state-of-the-art, all such syntax element bins are context-coded. It is noted that, depending on the context budget, the *gtX* binarization might not or might include the remaining level *(remLevel)* coding using the Rice method. For instance, if the budget is exhausted in the middle the *gtX* binarization method (e.g., after *gt4Flag,* hence *cutoff=4*)*,* then the remaining levels with respect to the last gtX flag (e.g., 4) are coded in Rice method (e.g. *remLevel = coeffLevel - 4* in the above example). In this disclosure, both cases (i.e., with and without the need to code *remLevel*) are defined under the name of *gtX* binarization.
- The *pure-rem* **binarization:** In this binarization of the state-of-the-art, no *sigFlag* is binarized from the coefficient level, and the entire coefficient level is coded in Rice mode (i.e. *cutoff=0,* hence *remLevel = coeffLevel*)*,* with no CABAC context.
- **Over-budget point:** When coding a residual signal using TSRC, the context budget might exhaust at one point during the coefficient coding, due to the decimation process (see *Context budget excess condition* described above). Such point is referred to as the *over-budget point* in t this disclosure. For instance, the *over-budget point* of a residual block might occur after the coding of the parity flag of the third coefficient in the scan order of the second coefficient group. It is noted that a residual block might not have an *over-budget point,* if its context budget does not exhaust until after the coding of the last syntax element.
It is noted that according to above definitions, a given coefficient is coded using one and only one of the two binarizations. In other words, a coefficient uses the gtXbinarization if, *when starting to code the coefficient,* there is budget remaining. Otherwise, the coefficient uses the pure-rem binarization. In other words, if the coding of a coefficient starts before the *over-budget point,* the *gtX* method is used, whereas, if the coding of the coefficient starts after the *over-budget point,* then the *pure-rem* method is used.

### sigFlag-rem binarization

In a first aspect of this disclosure, a binarization method, like a TSRC binarization method is introduced which is referred to as *sigFlag-rem* binarization. In this method, an unconditional *sigFlag* coding scheme is implemented, where the *sigFlag* is always coded, regardless of whether the context budget is exhausted. To recall, the state-of-the-art TSRC method does not code the *sigFlag* of a coefficient if the *pure-rem* binarization is used after the *over-budget point.*

From a different point of view, one may consider the first aspect of this disclosure as a third binarization scheme with respect to the two binarization schemes *gtX* binarization and *pure-rem* binarization described above. In accordance with embodiments, the *sigFlag-Rem* binarization is deployed after the *over-budget* point to replace the *pure-rem* binarization method of the state-of-the-art.

In the *sigFlag-rem* binarization method, first, the *sigFlag* is binarized from the coefficient level *coeffLevel.* Then, if *sigFlag=*1*,* the remaining level is coded in the bypass Rice mode. The bypass Rice mode part of the *sigFlag-rem* method follows the same process as the third pass of coefficient coding (see the description of the *Multi-passes coefficient coding in TSRC*)*.* However, the computation of the remaining value takes into the account that the *sigFlag* has been already coded. In other words, the *remLevel* in the *sigFlag-rem* binarization method is computed by using the cutoff value of 1, which means *remLevel*=(*coeffLevel* - 1).

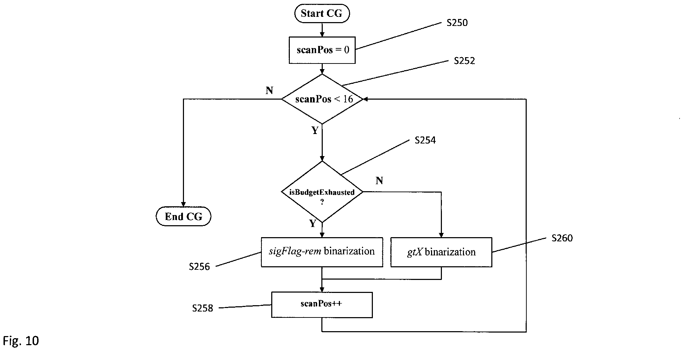

Fig. 10 is a flow diagram illustrating an embodiment of a coefficient level coding of a coefficient group (CG) using the *sigFlag-rem* binarization for a coefficient group (of 4×4=16 coefficients), where the choice between *sigFlag-rem* and *gtX* binarization is made based on the context budget. The process assumes a CG 202 as depicted in Fig. 3 having a size of 4x4, i.e., 16 scan positions 0 to 16. After the process of Fig. 10 starts, initially, the current scan position scanPos is set to zero S250. Then it is determined S252 whether or not the entire CG has been processed, i.e., whether scanPos is less than 16. If no, all scan positions have been processed and the processing of the current block or CG terminates. The process may be repeated for a next CG. If yes, it is determined S254 whether the context budget is sufficient for the context coding, i.e., whether or not the budget is exhausted. If yes, the *sigFlag-rem* binarization S256 in accordance with embodiments of the present disclosure is used. Otherwise, if it is determined at S254 that the context budget is not sufficient for the context coding, the conventional *gtX* binarization S260 is used. Then, the scan position is incremented S258 by one and the process returns to S252.

### Modified coding order of non-sigFlag bins

The above described first aspect of the present invention allows to unconditionally code the sigFlag, whether by the *gtX* method or the *sigFlag-rem* method. The new binarization method *sigFlag-rem* is to be used when the context budget is exhausted. When implementing the *sigFlag-rem* method, which is used when the context budget is exhausted (i.e., after the over-budget point), its deployment might be pursued by also changing the coding order of other syntax elements.

In a second aspect of this disclosure, responsive to coding a significance flag of a coefficient, the coding order of the remaining level of a coefficient may be changed, compared to a state-of-the-art procedure (see the description of the *Multi-passes coefficient coding in TSRC*). Embodiments are now described with reference to cases when the *sigFlag-Rem* binarization method is applied, however, the present disclosure is not limited to such embodiments. In accordance with other embodiments, the coding order of the remaining level of a coefficient may also be changed when coding the significance flag of a coefficient using a conventional approach.

Embodiments and methods are now described which incorporate the changes in order once the *sigFlag-rem* binarization method according to the first aspect of the present disclosure is deployed after the *over-budget point.* The following embodiments apply, when the *sigFlag-rem* binarization method is used for a coefficient and the *sigFlag* of that coefficient is true. Therefore, other syntax elements, e.g., *sign* and the *remLevel* are yet to be coded. The following embodiments illustrate to interleave the coding of *sign* and *remLevel* of a current coefficient, with syntax elements of other coefficients of the residual block. It is noted that the embodiments described are agnostic to the coding method (e.g. CABAC context, bypass, etc.) and only focus on the coding order of the binary syntax elements. In other words, when an embodiment proposes to "code X" at certain position of the coding order, the coding may be carried out either by CABAC context, bypass or any other method.

In accordance with a first embodiment, a coefficient is binarized and coded using the *sigFlag-rem* approach according to the first aspect of the present disclosure, and both the *sign* flag and *remLevel* are coded immediately after its *sigFlag.* In other words, no other syntax element bin related to other coefficients of the same block is coded between the coding of the *sigFlag* and *sign* or between the coding of the *sign* and *remLevel* of the coefficient.

In accordance with a second embodiment, a coefficient is binarized and coded using the *sigFlag-rem* approach according to the first aspect of the present disclosure, and the *sign* flag is coded immediately after the *sigFlag.* However, the coding of the *remLevel* is delayed by a gap in which at least one syntax element related to another coefficient is coded.

In accordance with a third embodiment, a coefficient is binarized and coded using the *sigFlag-rem* approach according to the first aspect of the present disclosure, and the *remLevel* is coded immediately after the *sigFlag.* However, the coding of the *sign* is delayed by a gap in which at least one syntax element related to another coefficient is coded.

In accordance with a fourth embodiment, a coefficient is binarized and coded using the *sigFlag-rem* approach according to the first aspect of the present disclosure, and the coding of both *sign* and the *remLevel* is delayed by a gap in which at least one syntax element related to another coefficients is coded. In other words, none of the *sign* and *remLevel* are coded immediately after the *sigFlag.*

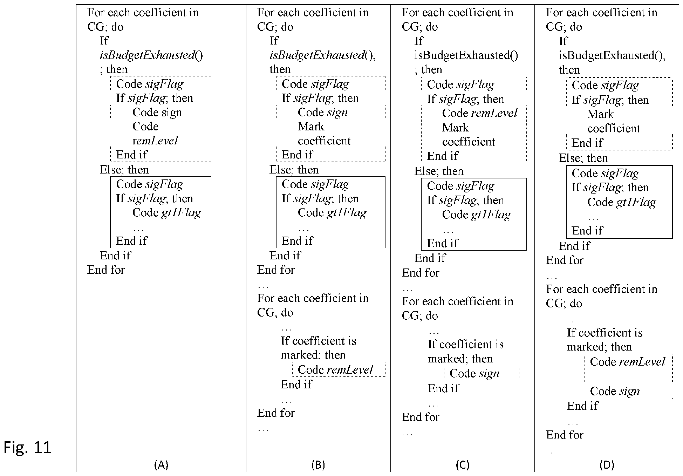

Fig. 11(A) to Fig. 11(D) illustrate the above described first to fourth embodiments to modify the coding order of syntax elements, when the *sigFlag-rem* binarization method is applied. Fig. 11(A) illustrates the first embodiment with no interleaving, and Fig. 11(B) to Fig. 11(D) illustrate the second, third and fourth embodiment, respectively, where the *sigFlag-rem* binarization (light grey) and the *gtX* (dark grey) binarization are interleaved according to the different approaches.

### Over-budget management

Once the *over-budget point* is reached during the coefficient coding of a residual block, different strategies may be taken. In particular, after the *over-budget point,* two syntax element bins, namely *sigFlag* and *sign,* are still coded for the rest of the coefficients in the block.

In a third aspect of this disclosure, a predefined context budget management strategy for coding one or more syntax elements of a coefficient is provided. In accordance with embodiments, the budget may be respected or, in accordance with other embodiments, a certain excess of the budget may be allowed. Embodiments are now described with reference to cases when the *sigFlag-Rem* binarization method is applied, however, the present disclosure is not limited to such embodiments. In accordance with other embodiments, the predefined a context budget management strategy may also be used when coding the significance flag of a coefficient using a conventional approach.

In accordance with a first embodiment, the context budget is fully respected. To do so, both the *sigFlag* and *sign* are bypass coded after the *over-budget point.* In other words, the proposed *sigFlag-rem* binarization is deployed, however, no CABAC context is used to code either of these two syntax elements.

In accordance with a second embodiment, the context budget may be exceeded in a limited way and only for one of the *sign* or *sigFlag* syntax element bins. In one embodiment, the *sigFlag* continues to be CABAC context coded after the *over-budget point,* however, the *sign* is bypass coded (i.e. no CABAC context used). In another embodiment, the *sigFlag* is bypass coded and the *sign* continues to be context coded after the *over-budget point.*

In accordance with a third embodiment, both *sigFlag* and *sign* may be allowed to be context coded after the over-budget point.

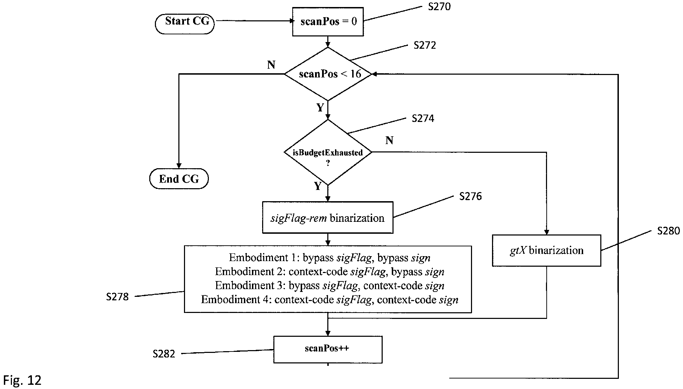

Fig. 12 illustrates above the above described over-budget management embodiments when the *sigFlag-rem* binarization is deployed. The process assumes a CG 202 as depicted in Fig. 3 having a size of 4x4, i.e., 16 scan positions 0 to 16. After the process of Fig. 12 starts, initially, the current scan position scanPos is set to zero S270. Then it is determined S272 whether or not the entire CG has been processed, i.e., whether scanPos is less than 16. If no, all scan positions have been processed and the processing of the current block or CG terminates. The process may be repeated for a next CG. If yes, it is determined S274 whether the context budget is sufficient for the context coding, i.e., whether or not the budget is exhausted. If yes, the *sigFlag-rem* binarization S276 in accordance with embodiments of the first aspect of the present disclosure is used, and one of the above described over-budget management embodiments is applied S278. Otherwise, if it is determined at S274 that the context budget is not sufficient for the context coding, the conventional *gtX* binarization S280 is used. Then, the scan position is incremented S282 by one and the process returns to S272.

### Adaptive budget usage in anticipation of budget excess

In accordance with a fourth aspect of the present disclosure, a context budget management anticipates a future excess in the context budget and adaptively changes the priority of context budget usage. In accordance with embodiments, this aspect has two elements:
- *Low-budget prediction*: A condition is assessed to predict whether the context budget is going to exhaust before coding the last syntax element of the last coefficient of the current residual block.
- *Adjusted budget allocation*: If the low-budget prediction is true, meaning that the assessed condition predicts that the remaining context budget is not sufficient for coding all context-coded syntax element, then an adjusted budget allocation strategy is deployed. This strategy prioritizes certain syntax elements in using the remaining context budget.
It is noted that, in accordance with embodiments, if a positive low-budget prediction later turns out to be incorrect (i.e., the budget was actually sufficient), the adjusted budget allocation is deployed nonetheless. It is further noted that, in accordance with embodiments, predicting a *future excess* means that the context budget *is not currently* exhausted, according to the corresponding context budget excess condition.

In accordance with an embodiment, a low-budget prediction condition uses a threshold to compare a function of A) the remaining context budget and B) the scan position of the current coefficient of the residual block and C) number of coefficients in the residual block. If the value of the function is below the threshold, then it is predicted that the remaining context budget is not sufficient to context-code all syntax elements of the residual block. Hence, the adjusted budget allocation is determined to be deployed.

In accordance with another embodiment, the low-budget prediction condition may also take into account at least one information from a previously coded residual block. In one example, if the current residual block has a TSRC-coded neighbour that has ran out of context budget before finishing its coding, one may use its information to deduce whether the budget of the current block is also going to exhaust. In a particular example, one may store the budget consumption of the neighbouring block in different positions of the scan process. Then, this information may be used for comparison with current block's budget consumption. If it is observed that current block has a similar or higher pace of budget consumption at the same scan position, one may predict that the current block also runs out of context budget.

In accordance with yet another embodiment, when the low-budget prediction is true, a new adjusted budget allocation method de-prioritizes at least one syntax element in using the remaining context budget. Once a syntax element is de-prioritized, the next instances of that syntax element are bypass coded (i.e. no CABAC context used). In one example, the sign flag is de-prioritized. In another example, both sign flag and the parity flag are de-prioritized.

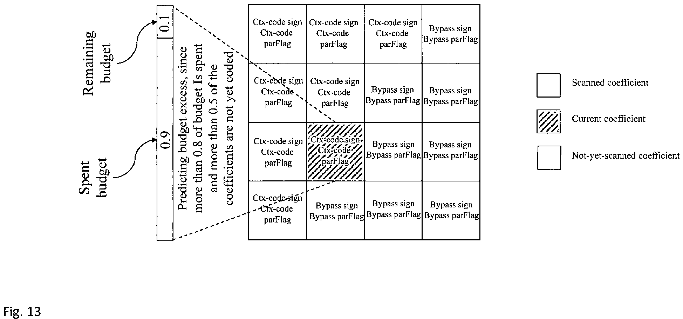

Fig. 13 illustrates the use of the bypass mode for *sign* and *parFlag* after predicting a context budget excess, where at the current coefficient it is predicted that the context budget is going to exceed by the end of the coefficient group. As a result, an adjusted budget allocation is deployed, where both *sign* and *parFlag* are bypassed in the coding of the remaining coefficients in the coefficient group. In this embodiment, the prediction is based on comparing the remaining budget and the remaining coefficients of the CG to two thresholds of 0.8 and 0.5, respectively. It is noted that this is an embodiment at the CG-level. However, this aspect may also be adjusted to be applied at the TU-level.

The embodiments described above may be used independent of whether the *sigFlag-Rem* binarization method is applied or not.

### Multi-threshold budget excess condition

In state-of-the-art TSRC, the context budget excess condition is assessed by comparing the remaining budget to a fixed threshold (i.e. 4), as described above (see *Context budget excess condition*).

In accordance with a fifth aspect of the present disclosure, the context budget excess condition uses at least two threshold values, depending on different conditions of the coding process.

In accordance with a first embodiment, at least two thresholds are used to evaluate whether the context budget is exceeded. In one example, two thresholds of *thr₁*=1 and *thr*₂=4 are deployed.

In accordance with embodiments, to decide which threshold is applied to determine whether the budget is exhausted, the next syntax element to be coded is taken into account. In one example, if the next syntax element to be coded is a *sigFlag,* then *thr*=1 is used; otherwise *thr*=4 is used.

In accordance with other embodiments, to decide which threshold is applied, the maximum number of context-coded syntax element until the next assessment of the context budget excess condition is taken into account. For instance, if the context budget excess is assessed at the beginning of a coding pass, up to N syntax elements may possibly be coded by CABAC contexts, then a threshold *thr*=N is applied.

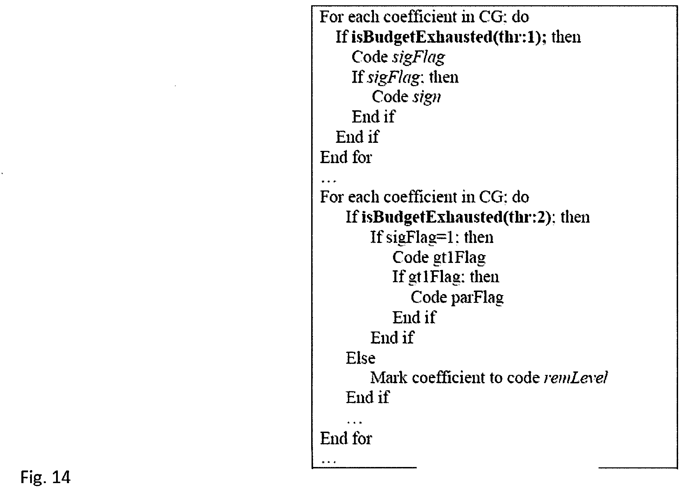

Fig. 14 illustrates an embodiment using two different conditions for the budget excess condition. In this embodiment, the first pass codes only *sigFlag* and sign. Therefore, in this pass, before coding the sigFlag, the first budget excess condition **isBudgetExhausted(thr:1)** is evaluated to know if there is at least thr=1 context budget remaining. If so, the corresponding *sigFlag* is context coded; otherwise it is bypass coded. In the second pass, for each coefficient with sigFlag=1, two syntax element bins, namely *gt1Flag* and *parFlag* are coded. As may be seen, in the second pass, the budget excess condition is evaluated at the beginning of each iteration, which means that up to two syntax element bins may potentially be context-coded until the next evaluation of the budget excess condition. Therefore, **isBudgetExhausted(thr:2)** is used to determine whether adequate budget remains for the ongoing coefficient.

The embodiments described above may be used independent of whether the *sigFlag-Rem* binarization method is applied or not.

### Decoding Method

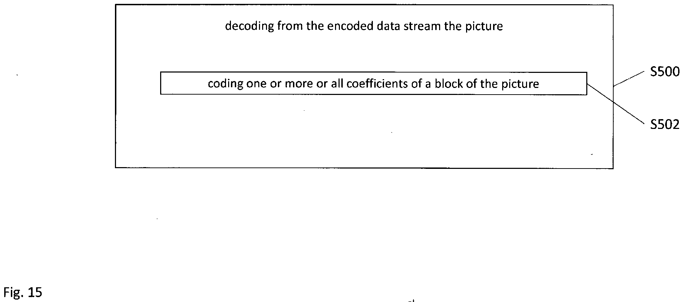

Fig. 15 illustrates a flow diagram of a method for decoding an encoded data stream, the encoded data stream including data representing a picture. The method includes the following:
S500: Decoding from the encoded data stream the picture, wherein decoding the picture comprises coding S502 one or more or all coefficients of a block of the picture, wherein the coding S502 comprises one or more or all of the following:
- responsive to a context budget for context-coding the one or more or all coefficients of the block being exhausted, a significance flag (sigFlag) of a coefficient is determined and coded, and/or
- responsive to coding a significance flag (sigFlag) of a coefficient, a coding of a plurality of further syntax elements of the coefficient is interleaved with a coding of one or more syntax elements of one or more other coefficients of the block; and/or
- responsive to a context budget for context-coding the one or more or all coefficients of the block being exhausted, using a predefined a context budget management strategy for coding one or more syntax elements of a coefficient, and/or
- depending on a prediction of a context budget excess for a context-coding of the one or more or all coefficients of the block, one or more of a plurality of syntax elements of a coefficient are coded using non-context coding, and/or
- an excess of a context budget for context-coding the one or more or all coefficients of the block is determined using a context budget excess condition selected from one of a plurality of context budget excess conditions.

### Encoding Method

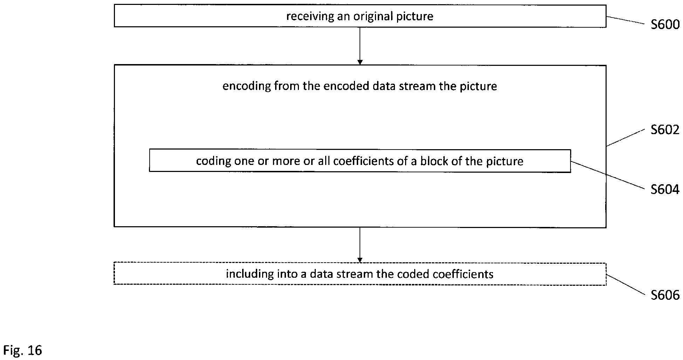

Fig. 16 illustrates a flow diagram of a method for encoding a picture into an encoded data stream. The encoded data stream includes data representing the picture and the method includes the following:
S600: Receiving an original picture.
S602: Encoding the picture into the encoded data stream, wherein encoding the picture comprises coding S502 one or more or all coefficients of a block of the picture, wherein the coding S602 comprises one or more or all of the following:
   - responsive to a context budget for context-coding the one or more or all coefficients of the block being exhausted, a significance flag (sigFlag) of a coefficient is determined and coded, and/or
   - responsive to coding a significance flag (sigFlag) of a coefficient, a coding of a plurality of further syntax elements of the coefficient is interleaved with a coding of one or more syntax elements of one or more other coefficients of the block; and/or
   - responsive to a context budget for context-coding the one or more or all coefficients of the block being exhausted, using a predefined a context budget management strategy for coding one or more syntax elements of a coefficient, and/or
   - depending on a prediction of a context budget excess for a context-coding of the one or more or all coefficients of the block, one or more of a plurality of syntax elements of a coefficient are coded using non-context coding, and/or
   - an excess of a context budget for context-coding the one or more or all coefficients of the block is determined using a context budget excess condition selected from one of a plurality of context budget excess conditions.

Optionally, the method comprises including S606 into the data stream or bitstream the coded coefficients.

### Further embodiments

So far, the inventive concept has been described with reference to aspects and embodiments concerning methods of processing one or more blocks of a picture, e.g., for decoding and/or for encoding. In accordance with further embodiments, the present disclosure also provides an apparatus of processing one or more blocks of a picture as encoders/decoders including such an apparatus.

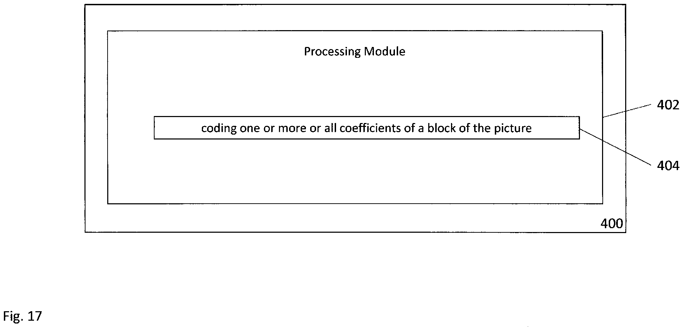

Fig. 17 illustrates a block diagram of an apparatus 400 of predicting one or more blocks of a picture in accordance with embodiments of the present disclosure. The apparatus 400 includes a processing module 402. The processing module is configured to code 404 one or more or all coefficients of a block of the picture, wherein the processing module 402 is configured to perform one or more or all of the following:
- responsive to a context budget for context-coding the one or more or all coefficients of the block being exhausted, determine and code a significance flag (sigFlag) of a coefficient, and/or
- responsive to coding a significance flag (sigFlag) of a coefficient, interleave a coding of a plurality of further syntax elements of the coefficient with a coding of one or more syntax elements of one or more other coefficients of the block; and/or
- responsive to a context budget for context-coding the one or more or all coefficients of the block being exhausted, use a predefined a context budget management strategy for coding one or more syntax elements of the coefficient, and/or
- depending on a prediction of a context budget excess for a context-coding of the one or more or all coefficients of the block, code one or more of a plurality of syntax elements of a coefficient using non-context coding, and/or
- determine an excess of a context budget for context-coding the one or more or all coefficients of the block using a context budget excess condition selected from one of a plurality of context budget excess conditions.

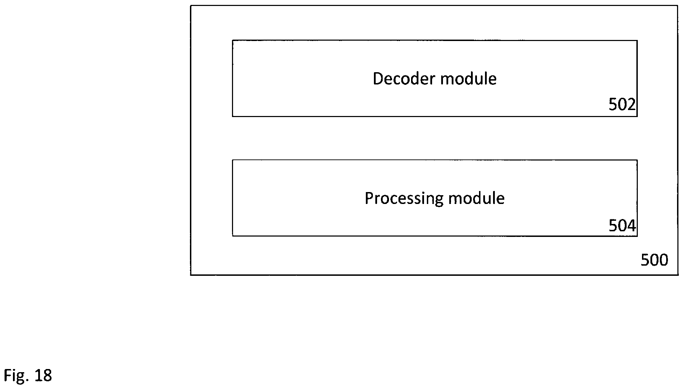

Fig. 18 illustrates a block diagram of a decoder for decoding an encoded data stream in accordance with embodiments of the present disclosure. The encoded data stream includes data representing a picture. The decoder 500 includes the following modules:
502: A decoder module configured to decode from the encoded data stream the picture.
504: A processing module, e.g., a prediction module 170 as depicted in Fig. 2. The processing module 502 is configured to operate in accordance with embodiments of the present disclosure. For example, the processing module 502 includes an apparatus as described with reference to Fig. 17.

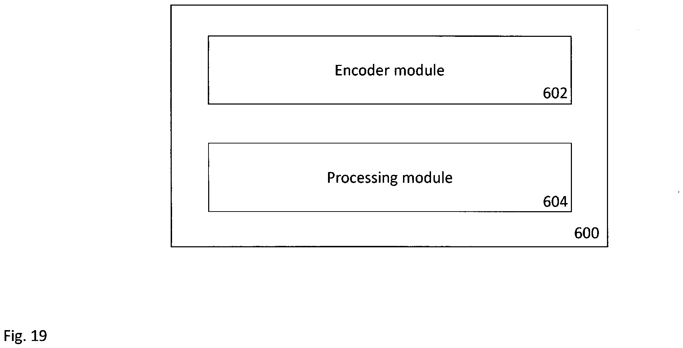

Fig. 19 illustrates a block diagram of an encoder for encoding a picture into an encoded data stream in accordance with embodiments of the present disclosure. The encoded data stream includes data representing the picture. The encoder 600 includes the following modules:
602: An encoder module configured to receive the original picture and to encode the picture into the encoded data stream.
604: A processing module, e.g., a prediction module 124 as depicted in Fig. 1. The processing module 602 is configured to operate in accordance with embodiments of the present disclosure. For example, the processing module 502 includes an apparatus as described with reference to Fig. 17.

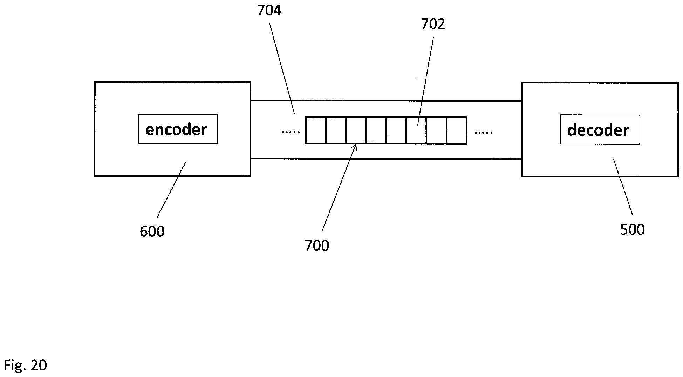

Fig. 20 illustrates a data stream 700 in accordance with embodiments of the present disclosure, which has encoded thereinto a picture and information data associated with the picture. For example, the data stream or bitstream 700 may be provided by an encoder 600 that performs the inventive method when encoding the picture into the data stream 700. The data stream 700 is transmitted to a decoder 500 via a wired or wireless transmission medium 704, like cable or a radio link, and the decoder 500 decodes from the data stream 700 the picture. The data stream includes coefficients 702 encode in accordance with embodiments of the present disclosure.

Although some aspects of the disclosed concept have been described in the context of an apparatus, it is clear that these aspects also represent a description of the corresponding method, where a block or a device corresponds to a method step or a feature of a method step. Analogously, aspects described in the context of a method step also represent a description of a corresponding block or item or feature of a corresponding apparatus.

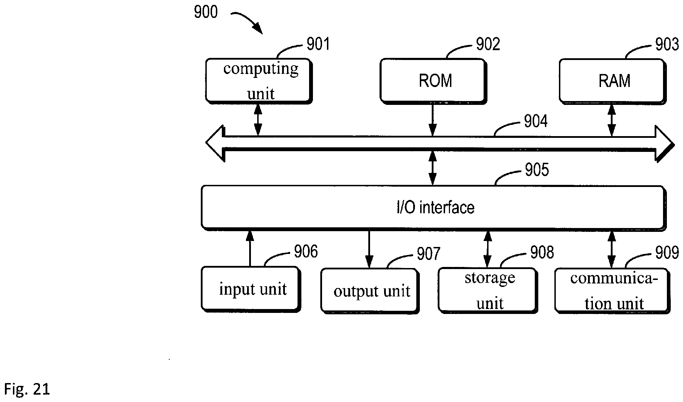

Fig. 21 is a block diagram illustrating an electronic device 900 according to embodiments of the present disclosure. The electronic device is intended to represent various forms of digital computers, such as a laptop, a desktop, a workstation, a personal digital assistant, a server, a blade server, a mainframe computer, and other suitable computers. The electronic device may also represent various forms of mobile devices, such as a personal digital processor, a cellular phone, a smart phone, a wearable device, and other similar computing devices. The components shown herein, their connections and relationships, and their functions are described as examples only, and are not intended to limit implementations of the present disclosure described and/or claimed herein. The device 900 includes a computing unit 901 to perform various appropriate actions and processes according to computer program instructions stored in a read only memory (ROM) 902, or loaded from a storage unit 908 into a random access memory (RAM) 903. In the RAM 903, various programs and data for the operation of the storage device 900 may also be stored. The computing unit 901, the ROM 902, and the RAM 903 are connected to each other through a bus 904. An input/output (I/O) interface 905 is also connected to the bus 904.

Components in the device 900 are connected to the I/O interface 905, including: an input unit 906, such as a keyboard, a mouse; an output unit 907, such as various types of displays, speakers; a storage unit 908, such as a disk, an optical disk; and a communication unit 909, such as network cards, modems, wireless communication transceivers, and the like. The communication unit 909 allows the device 900 to exchange information/data with other devices through a computer network such as the Internet and/or various telecommunication networks. The computing unit 901 may be formed of various general-purpose and/or special-purpose processing components with processing and computing capabilities. Some examples of the computing unit 901 include, but are not limited to, a central processing unit (CPU), graphics processing unit (GPU), various specialized artificial intelligence (AI) computing chips, various computing units that run machine learning model algorithms, digital signal processor (DSP), and any suitable processor, controller, microcontroller, etc. The computing unit 901 performs various methods and processes described above, such as an image processing method. For example, in some embodiments, the image processing method may be implemented as computer software programs that are tangibly embodied on a machine-readable medium, such as the storage unit 908. In some embodiments, part or all of the computer program may be loaded and/or installed on the device 900 via the ROM 902 and/or the communication unit 909. When a computer program is loaded into the RAM 903 and executed by the computing unit 901, one or more steps of the image processing method described above may be performed. In some embodiments, the computing unit 901 may be configured to perform the image processing method in any other suitable manner (e.g., by means of firmware).

Various implementations of the systems and techniques described herein above may be implemented in digital electronic circuitry, integrated circuit systems, field programmable gate arrays (FPGA), application specific integrated circuits (ASIC), application specific standard products (ASSP), system-on-chip (SOC), complex programmable logic device (CPLD), computer hardware, firmware, software, and/or combinations thereof. These various embodiments may include being implemented in one or more computer programs executable and/or interpretable on a programmable system including at least one programmable processor, and the programmable processor may be a special-purpose or general-purpose programmable processor, and may receive data and instructions from a storage system, at least one input device and at least one output device, and may transmit data and instructions to the storage system, the at least one input device, and the at least one output device.

Program code for implementing the methods of the present disclosure may be written in any combination of one or more programming languages. These program codes may be provided to a processor or controller of a general computer, a dedicated computer, or other programmable data processing device, such that the program codes, when executed by the processor or controller, cause the functions and/or operations specified in the flow diagrams and/or block diagrams is performed. The program code may be executed entirely on the machine, partly on the machine, as a stand-alone software package partly on a machine and partly on a remote machine or entirely on a remote machine or server.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, random access memories (RAM), read-only memories (ROM), erasable programmable read-only memories (EPROM or flash memory), fiber optics, compact disc read-only memories (CD-ROM), optical storage devices, magnetic storage devices, or any suitable combination of the foregoing.

To provide interaction with a user, the systems and techniques described herein may be implemented on a computer having a display device (e.g., a cathode ray tube (CRT) or liquid crystal display (LCD)) for displaying information for the user; and a keyboard and pointing device (e.g., a mouse or trackball) through which a user may provide an input to the computer. Other types of devices may also be used to provide interaction with the user, for example, the feedback provided to the user may be any form of sensory feedback (e.g., visual feedback, auditory feedback, or tactile feedback); and may be in any form (including acoustic input, voice input, or tactile input) to receive the input from the user.

The systems and techniques described herein may be implemented on a computing system that includes back-end components (e.g., as a data server), or a computing system that includes middleware components (e.g., an application server), or a computing system that includes front-end components (e.g., a user computer with a graphical user interface or web browser through which a user may interact with implementations of the systems and techniques described herein), or a computer system including such a backend components, middleware components, front-end components or any combination thereof. The components of the system may be interconnected by any form or medium of digital data communication (e.g., a communication network). Examples of the communication network includes: Local Area Networks (LAN), Wide Area Networks (WAN), the Internet and blockchain networks.

The computer system may include a client and a server. The Client and server are generally remote from each other and usually interact through a communication network. The relationship of the client and the server is generated by computer programs running on the respective computers and having a client-server relationship with each other. The server may be a cloud server, also known as a cloud computing server or a cloud host, which is a host product in the cloud computing service system, and solves the defects of difficult management and weak business expansion in traditional physical hosts and virtual private servers ("VPS" for short). The server may also be a server of a distributed system, or a server combined with a blockchain.

It is to be understood that the steps may be reordered, added or deleted by using the various forms of flows shown above. For example, the steps described in the present disclosure may be executed in parallel, sequentially, or in different orders, as long as the desired results of the technical solutions in the present disclosure may be achieved, and no limitation is imposed herein.

Further embodiments are now described:
A 1^{st} embodiment provides a method of processing one or more blocks of a picture, the method comprising:
   coding one or more or all coefficients of a block of the picture, wherein the coding comprises one or more or all of the following:
      responsive to a context budget for context-coding the one or more or all coefficients of the block being exhausted, a significance flag (*sigFlag*) of a coefficient is determined and coded, and/or
   responsive to coding a significance flag (*sigFlag*) of a coefficient, a coding of a plurality of further syntax elements of the coefficient is interleaved with a coding of one or more syntax elements of one or more other coefficients of the block; and/or
   responsive to a context budget for context-coding the one or more or all coefficients of the block being exhausted, using a predefined a context budget management strategy for coding one or more syntax elements of a coefficient, and/or
   depending on a prediction of a context budget excess e for a context-coding of the one or more or all coefficients of the block, one or more of a plurality of syntax elements of a coefficient are coded using non-context coding, and/or
   an excess of a context budget for context-coding the one or more or all coefficients of the block is determined using a context budget excess condition selected from one of a plurality of context budget excess conditions.
A 2^{nd} embodiment provides the method of the 1^{st} embodiment, wherein, responsive to a context budget being exhausted, the coefficient is binarized to obtain a plurality of syntax elements, the plurality of syntax elements comprising the significance flag and one or more of the following: a remaining value level *(remLevel)* of the coefficient and a sign (*sign*) of the coefficient.
A 3^{rd} embodiment provides the method of the 2^{nd} embodiment, wherein, when the significance flag indicates that the coefficient is significant, e.g., is a non-zero coefficient,
   - the remaining value level is coded, or
   - the sign and the remaining value level are coded.
A 4^{th} embodiment provides the method of the 2^{nd} or 3^{rd} embodiment, wherein
   - the significant flag is binarized from a coefficient level, e.g., from an absolute value of the coefficient, and
   - when the significance flag indicates that the coefficient is significant, the remaining level and sign are coded using a non-context coding, e.g., in a bypass Rice mode.
A 5^{th} embodiment provides the method of the 4^{th} embodiment, wherein the remaining level to be non-context coded, e.g., in the bypass Rice mode, is determined using a cutoff value of one.
A 6^{th} embodiment provides the method of the 4^{th} or 5^{th} embodiment, wherein non-context coding the remaining level comprises:
   - decomposing the coefficient into an amplitude and sign,
   - determining the remaining level as: *remLevel = coeffLevel -* 1, with *coeffLevel* being the amplitude,
   - coding the remaining level in a bypass Rice mode, and
   - coding the sign.
A 7^{th} embodiment provides the method of any one of the 2^{nd} to 6^{th} embodiments, wherein both a sign value and a remaining level value of the coefficient are coded immediately following the coding of the significant flag.
An 8^{th} embodiment provides the method of any one of the 1^{st} to 6^{th} embodiments, wherein a coding of a sign value and a remaining level value of the coefficient is interleaved with a coding of one or more syntax elements of one or more other coefficients of the block.
A 9^{th} embodiment provides the method of the 8^{th} embodiment, wherein the sign value is coded immediately following the coding of the significant flag, and a coding of the remaining level value is deferred until a coding of at least one syntax element associated with another coefficient is completed.
A 10^{th} embodiment provides the method of the 8^{th} embodiment, wherein the remaining level value is coded immediately following the coding of the significant flag, and a coding of the sign value is deferred until a coding of at least one syntax element associated with another coefficient is completed.
An 11^{th} embodiment provides the method of the 8^{th} embodiment, wherein a coding of the sign and the remaining level values is deferred from the coding of the significant flag until a coding of at least one syntax element associated with another coefficient is completed.
A 12^{th} embodiment provides the method of any one of the 7^{th} to 11^{th} embodiments, wherein the sign value and the remaining level value of the coefficient are coded using non-context coding, e.g., a bypass Rice mode, or context-coding using an associated context, like a Context-Adaptive Binary Arithmetic Coding (CABAC) context model.
A 13^{th} embodiment provides the method of the 12^{th} embodiment, wherein the context-coding is continued despite the context budget being exhausted.
A 14^{th} embodiment provides the method of any one of the preceding embodiments, wherein the predefined context budget management strategy
   - causes a switching to a non-context mode, like a bypass mode, or
   - allows a certain level of exceeding the context budget.
A 15^{th} embodiment provides the method of the 14^{th} embodiment, wherein the predefined context budget management strategy defines that, once the context budget is exhausted, none of the syntax elements is continued to be context-coded.
A 16^{th} embodiment provides the method of the 14^{th} embodiment, wherein the predefined context budget management strategy defines that, once the context budget is exhausted, only a subset of the syntax elements is continued to be context-coded.
A 17^{th} embodiment provides the method of the 14^{th} embodiment, wherein the predefined context budget management strategy defines that, once the context budget is exhausted, the syntax elements are continued to be context-coded despite the context budget being exhausted.
An 18^{th} embodiment provides the method of any one of the 14^{th} to 17^{th} embodiments, wherein the syntax elements comprise a significance flag and a sign of the coefficient.
A 19^{th} embodiment provides the method of any one of the preceding embodiments, wherein the prediction of the context budget excess e predicts whether the context budget is exhausted prior to completing the context-coding of a final syntax element of a last coefficient of the block.
A 20^{th} embodiment provides the method of the 1^{st} or 19^{th} embodiment, wherein the prediction is based on a function of
   - a remaining context budget,
   - a scan position of the current coefficient of the block, and
   - a number of coefficients in the block.
A 21^{st} embodiment provides the method of the 1^{st} , 19^{th} or 20^{th} embodiment, wherein the prediction is based on at least one information from a previously coded block.
A 22^{nd} embodiment provides the method of the 21^{st} embodiment, wherein the at least one information from a previously coded block is whether or not the previously coded block has ran out of context budget before finishing the coding of a final syntax element of a last coefficient of the block.
A 23^{rd} embodiment provides the method of the 21^{st} or 22^{nd} embodiment, wherein the at least one information from a previously coded block is a budget consumption of the previously coded block at different positions of the scan process, which is compared with a budget consumption of the current block.
A 24^{th} embodiment provides the method of any one of the 1^{st} and 19^{th} to 23^{rd} embodiments, wherein, responsive to the prediction indicating that the context budget will be exhausted, one or more instances of syntax elements of the coefficients of the block are no longer context coded.
A 25^{th} embodiment provides the method of the 24^{th} embodiment, wherein a priority associated with an instance of the syntax elements is modified.
A 26^{th} embodiment provides the method of the 25^{th} embodiment, wherein, responsive to lowering a priority of an instance of the syntax element, the associated syntax elements are no longer context coded.
A 27^{th} embodiment provides the method of any one of the 1^{st} and 19^{th} to 27^{th} embodiments, wherein the syntax elements comprise a significance flag and a sign of the coefficient.
A 28^{th} embodiment provides the method of any one of the preceding embodiments, wherein the context budget excess condition is selected dependent on at least one of the following:
   - a number of syntax elements of the coefficient to be context-coded,
   - a maximum number of syntax elements that can be context-coded during a predefined process, like a coding pass for the coefficient.
A 29^{th} embodiment provides the method of any the 29^{th} embodiment, wherein, in case a first number of next syntax elements of the coefficient is to be context-coded, like only a sigFlag, a first threshold is used as the context budget excess condition, and, in case a second number of next syntax elements of the coefficient is to be context-coded, a second threshold is used as the context budget excess condition, the second number and threshold being higher than the first number and threshold.
A 30^{th} embodiment provides the method of the 29^{th} embodiment, wherein, in case the context budget excess is assessed at a beginning of a coding pass for the coefficient, in case up to N syntax elements are possibly coded by context-coding, then a threshold of N is used.
A 31^{st} embodiment provides the method of any one of the preceding embodiments, wherein the one or more syntax elements of the coefficient comprises one or more of the following:
   - a significance flag (sig-Flag) indicating that a coefficient is significant when it is a non-zero coefficient,
   - a greater-than-one flag (gt1),
   - a parity flag,
   - one or more greater-than-X flags (gtX), where X=2,4,6,8,
   - a sign.
A 32^{nd} embodiment provides the method of any one of the preceding embodiments, wherein the block is a coefficient group (CG) obtained by decomposing a transform unit (TU).
A 33^{rd} embodiment provides the method of any one of the preceding embodiments, wherein the coefficients are coefficients of a Transform Skip (TS) mode or of a Transform Coding mode
A 34^{th} embodiment provides a method for decoding a data stream, the data stream including data representing a picture, the method comprising:
   decoding from the data stream the picture,
   wherein decoding the picture comprises processing one or more blocks of the pictures according to any one of the preceding embodiments.
A 35^{th} embodiment provides a method for encoding a picture into a data stream, the data stream including data representing the picture, the method comprising:
   receiving an original picture, and
   encoding the picture into the data stream,
   wherein encoding the picture comprises processing one or more blocks according to any one of the 1^{st} to 34^{th} embodiments.
A 36^{th} embodiment provides a non-transitory computer-readable storage medium comprising instructions which, when executed by a computer, cause the computer to carry out the method of any one of the preceding embodiments.
A 37^{th} embodiment provides an apparatus of processing one or more blocks of a picture, the apparatus comprising:
   a processing module, wherein the processing module is configured to code one or more or all coefficients of a block of the picture, wherein the processing module is configured to perform one or more or all of the following:
   responsive to a context budget for context-coding the one or more or all coefficients of the block being exhausted, determine and code a significance flag (*sigFlag*) of a coefficient, and/or
   responsive to coding a significance flag (*sigFlag*) of a coefficient, interleave a coding of a plurality of further syntax elements of the coefficient with a coding of one or more syntax elements of one or more other coefficients of the block; and/or
   responsive to a context budget for context-coding the one or more or all coefficients of the block being exhausted, use a predefined a context budget management strategy for coding one or more syntax elements of the coefficient, and/or
   depending on a prediction of a context budget excess e for a context-coding of the one or more or all coefficients of the block, code one or more of a plurality of syntax elements of a coefficient using non-context coding, and/or
   determine an excess of a context budget for context-coding the one or more or all coefficients of the block using a context budget excess condition selected from one of a plurality of context budget excess conditions.
A 38^{th} embodiment provides an apparatus for decoding a data stream, the data stream including data representing a picture, the apparatus comprising:
   a decoder module configured to decode from the data stream the picture, and
   an apparatus according to the 38^{th} embodiment.
A 39^{th} embodiment provides an apparatus for encoding a picture into a data stream, the data stream including data representing the picture, the apparatus comprising:
   an encoder module configured to receive the original picture and to encode the picture into the data stream, and
   an apparatus according to the 38^{th} embodiment.

The above-mentioned specific embodiments do not limit the scope of protection of the present disclosure. It is to be understood by those skilled in the art that various modifications, combinations, sub-combinations and replacements may be made depending on design requirements and other factors. Any modifications, equivalent replacements, and improvements made within the principles of the present disclosure or invention is to be included within the protection scope of the present disclosure or invention.

### References

[1] H.264: Advanced video coding for generic audiovisual services, https://www.itu.int/rec/T-REC-H.264-202108-P/en
[2] H.265: High efficiency video coding, https://www.itu.int/rec/T-REC-H.265-202108-P/en
[3] H.266: Versatile video coding, https://www.itu.int/rec/T-REC-H.266-202008-1/en
[4] AV1 Bitstream & Decoding Process Specification, http://aomedia.org/av1/specification/
[5] Algorithm description for Versatile Video Coding and Test Model 11 (VTM 11), https://jvet-experts.org/doc_end_user/current_document.php?id=10541
[6] Algorithm description of Enhanced Compression Model 12 (ECM 12), https://jvet-experts.org/doc_end_user/current_document.php?id=13915

## Claims

1. A method of processing one or more blocks of a picture, the method comprising:
coding one or more or all coefficients of a block of the picture, wherein the coding comprises one or more or all of the following:
responsive to a context budget for context-coding the one or more or all coefficients of the block being exhausted, a significance flag (*sigFlag*) of a coefficient is determined and coded, and/or
responsive to coding a significance flag (*sigFlag*) of a coefficient, a coding of a plurality of further syntax elements of the coefficient is interleaved with a coding of one or more syntax elements of one or more other coefficients of the block; and/or
responsive to a context budget for context-coding the one or more or all coefficients of the block being exhausted, using a predefined a context budget management strategy for coding one or more syntax elements of a coefficient, and/or
depending on a prediction of a context budget excess for a context-coding of the one or more or all coefficients of the block, one or more of a plurality of syntax elements of a coefficient are coded using non-context coding, and/or
an excess of a context budget for context-coding the one or more or all coefficients of the block is determined using a context budget excess condition selected from one of a plurality of context budget excess conditions.

2. The method of claim 1, wherein, responsive to a context budget being exhausted, the coefficient is binarized to obtain a plurality of syntax elements, the plurality of syntax elements comprising the significance flag and one or more of the following: a remaining value level (*remLevel*) of the coefficient and a sign (*sign*) of the coefficient.

3. The method of claim 2, wherein
- the significant flag is binarized from a coefficient level, e.g., from an absolute value of the coefficient, and
- when the significance flag indicates that the coefficient is significant, the remaining level and sign are coded using a non-context coding, e.g., in a bypass Rice mode.

4. The method of claims 2 or 3, wherein both a sign value and a remaining level value of the coefficient are coded immediately following the coding of the significant flag.

5. The method of any one of claims 1 to 5, wherein a coding of a sign value and a remaining level value of the coefficient is interleaved with a coding of one or more syntax elements of one or more other coefficients of the block.

6. The method of claim 5, wherein
- the sign value is coded immediately following the coding of the significant flag, and a coding of the remaining level value is deferred until a coding of at least one syntax element associated with another coefficient is completed, or
- the remaining level value is coded immediately following the coding of the significant flag, and a coding of the sign value is deferred until a coding of at least one syntax element associated with another coefficient is completed, or
- a coding of the sign and the remaining level values is deferred from the coding of the significant flag until a coding of at least one syntax element associated with another coefficient is completed, or

7. The method of any one of the preceding claims, wherein the predefined context budget management strategy
- causes a switching to a non-context mode, like a bypass mode, or
- allows a certain level of exceeding the context budget.

8. The method of claim 7, wherein the predefined context budget management strategy defines that, once the context budget is exhausted,
- none of the syntax elements is continued to be context-coded, or
- only a subset of the syntax elements is continued to be context-coded.
- the syntax elements are continued to be context-coded despite the context budget being exhausted.

9. The method of any one of the preceding claims, wherein the prediction of the context budget excess predicts whether the context budget is exhausted prior to completing the context-coding of a final syntax element of a last coefficient of the block.

10. The method of claim 1 or 9, wherein
the prediction is based on a function of
- a remaining context budget,
- a scan position of the current coefficient of the block, and
- a number of coefficients in the block and/or
the prediction is based on at least one information from a previously coded block, wherein
- the at least one information from a previously coded block is whether or not the previously coded block has ran out of context budget before finishing the coding of a final syntax element of a last coefficient of the block, and/or
- the at least one information from a previously coded block is a budget consumption of the previously coded block at different positions of the scan process, which is compared with a budget consumption of the current block.

11. The method of any one of claims 1, 9 or 10, wherein, responsive to the prediction indicating that the context budget will be exhausted, a priority associated with an instance of the syntax elements is modified, and
wherein, responsive to lowering a priority of an instance of the syntax element, the associated syntax elements are no longer context coded.

12. The method of any one of the preceding claims, wherein the context budget excess condition is selected dependent on at least one of the following:
- a number of syntax elements of the coefficient to be context-coded,
- a maximum number of syntax elements that can be context-coded during a predefined process, like a coding pass for the coefficient.

13. The method of any claim 12, wherein
- in case a first number of next syntax elements of the coefficient is to be context-coded, like only a sigFlag, a first threshold is used as the context budget excess condition, and, in case a second number of next syntax elements of the coefficient is to be context-coded, a second threshold is used as the context budget excess condition, the second number and threshold being higher than the first number and threshold, or
- in case the context budget excess is assessed at a beginning of a coding pass for the coefficient, in case up to N syntax elements are possibly coded by context-coding, then a threshold of N is used.

14. A non-transitory computer-readable storage medium comprising instructions which, when executed by a computer, cause the computer to carry out the method of any one of the preceding claims.

15. An apparatus of processing one or more blocks of a picture, the apparatus comprising:
a processing module, wherein the processing module is configured to code one or more or all coefficients of a block of the picture, wherein the processing module is configured to perform one or more or all of the following:
responsive to a context budget for context-coding the one or more or all coefficients of the block being exhausted, determine and code a significance flag (*sigFlag*) of a coefficient, and/or
responsive to coding a significance flag (*sigFlag*) of a coefficient, interleave a coding of a plurality of further syntax elements of the coefficient with a coding of one or more syntax elements of one or more other coefficients of the block; and/or
responsive to a context budget for context-coding the one or more or all coefficients of the block being exhausted, use a predefined a context budget management strategy for coding one or more syntax elements of the coefficient, and/or
depending on a prediction of a context budget excess for a context-coding of the one or more or all coefficients of the block, code one or more of a plurality of syntax elements of a coefficient using non-context coding, and/or
determine an excess of a context budget for context-coding the one or more or all coefficients of the block using a context budget excess condition selected from one of a plurality of context budget excess conditions.
